# EUROPEAN PATENT SPECIFICATION

(11) **EP 0 550 096 B1**
(45) Date of publication and mention of the grant of the patent: **04.08.2004**
(21) Application number: 92203974.8
(22) Date of filing: 17.12.1992
(51) Int. Cl.: G11B 11/10

(54) **Magneto-optical scanning device**
Magnetooptische Abtasteinrichtung
Dispositif de lecture magnétooptique

(30) Priority: 30.12.1991 EP 91203428
(43) Date of publication of application: 07.07.1993
(73) Proprietor: Koninklijke Philips Electronics N.V., 5621 BA Eindhoven (NL)
(72) Inventor: Jacobs, Bernardus Antonius Johannes, NL-5656 AA Eindhoven (NL); Van Grinsven, Petrus Augustinus Maria, NL-5656 AA Eindhoven (NL); Snijders, Wilfred André Maria, NL-5656 AA Eindhoven (NL); Spruit, Johannes Hendrikus Maria, NL-5656 AA Eindhoven (NL)
(74) Representative: Faessen, Louis Marie Hubertus

(56) References cited:
- EP-A- 0 341 778

## Description

The invention relates to device for scanning a magneto-optical recording layer, comprising a radiation source and an objective system for forming a radiation beam focused to a scanning spot on the recording layer, and a magnet coil comprising a winding with a core arranged between the objective system and the recording layer for generating a magnetic field at the location of the scanning spot. The core of a coil is meant to be the central part of the coil inside the winding.

Magneto-optical record carriers can be written and read by means of such a device. There are two writing methods. In the first method there is a constant magnetic field at the location of the scanning spot, while the radiation intensity of this scanning spot is modulated, dependent on the information to be recorded. In the second method the intensity of the scanning spot during writing is constant or modulated at a fixed frequency and the polarity of the magnetic field changes in dependence upon the information. The second method yields a greater information density than the first method and it is possible to overwrite prerecorded information directly with new information. However, it is a problem to realise the required power and the rapid changes of the field at the location of the scanning spot.

A device of the type described above is known from United States Patent No. 3 781 905. In this device the magnetic field is generated by a coil arranged between the objective system and the record carrier. The coil has an air core through which the focused radiation beam passes. A drawback of the known coil is that the core is relatively large so that a large electric power is necessary to generate the required magnetic field. This in turn leads to inadmissible heating of the coil. A further drawback of the known coil is that its height makes it difficult to arrange it in the small space which is available between the objective system and the record carrier.

EP 341778 A discloses another known scanning device according to the preamble of claim 1.

It is an object of the invention to provide a device in which the coil requires a smaller electric power and in which a larger space for accommodating the coil is realised.

To this end a device is provided according to claim 1. Due to the smaller vergence of the radiation beam in the core of the coil, the distance between the objective system and the record carrier may become larger and the diameter of the core may become smaller. By winding the turns of the coil as densely as possible on the core, the required power for the coil is reduced. A further advantage of the solid core is that dust particles, which could obstruct the radiation beam, cannot accumulate in the core. Moreover, the solid core can be used as a winding jig for the coil.

Since the core is a truncated cone having an apex angle which is equal to the apex angle of the radiation beam in the core, the diameter of the core can be still further reduced so that the power consumption will even be smaller.

By giving at least one surface of the core a curvature it is possible to influence the properties of the radiation beam to a further extent. For example, by giving a surface optical power, the diameter of the core can be further reduced. The core then has a converging effect and may take over a part of the function of the objective system.

In a special embodiment of the device according to the invention the objective system is integrated with the core. The device can be made more compact by integrating the objective system and the coil.

In a special embodiment of the device the core projects slightly below the winding. This has the advantage that, if the record carrier were to touch the coil, it would touch the hard core instead of the vulnerable winding of the coil.

A particular embodiment of the device according to the invention is characterized in that the coil has a yoke of magnetic material. The yoke provides a concentration of magnetic flux at the location of the scanning spot so that less power is necessary to generate the required magnetic field. Moreover, the yoke dissipates heat generated in the winding.

The invention will now be described in greater detail with reference to some embodiments and the accompanying drawings in which
Figure 1 shows a part of a known scanning device with a known coil;
Figure 2 shows a further scanning device with a coil;
Figure 3 shows an embodiment of the coil according to the invention; and
Figure 4 shows a coil according to the invention with an integrated lens and coil. Identical reference numerals in the Figures refer to the same components.

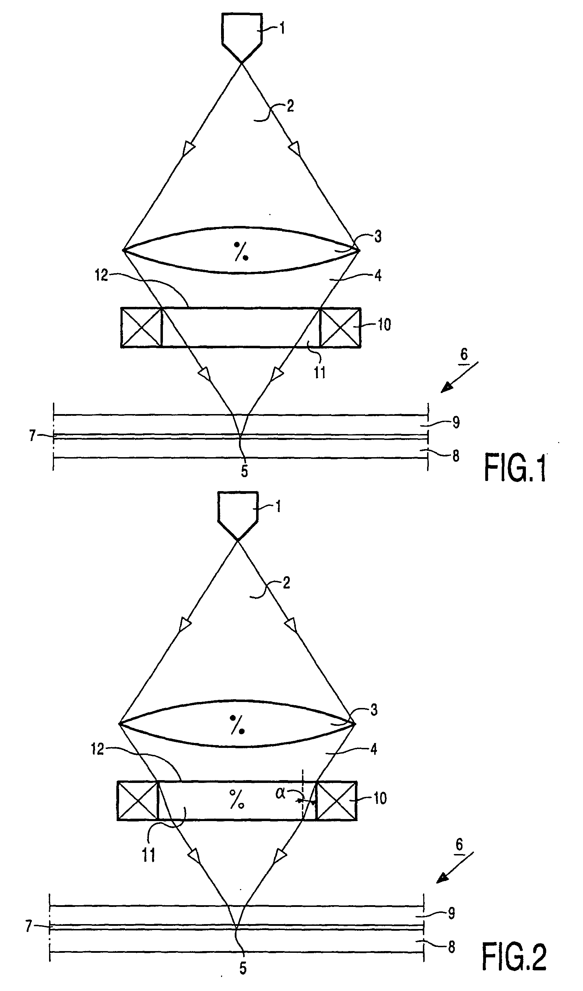

Figure 1 shows a part of a scanning device as is known from, *inter alia*, said United States Patent no. 3,781,905. A radiation source 1, for example a laser diode, supplies a beam 2 which is transformed to a focused radiation beam 4 by an objective system comprising, for example, one lens 3. The radiation beam 4 forms a spot 5 on a recording layer 7 of a record carrier 6 which is suitable for magneto-optical recording. The recording layer is provided, for example, on a substrate 8 and coated with a transparent protective coating 9 on the side of the scanning head. If a transparent substrate is used, the positions of components 8 and 9 may be interchanged. The lens 3 is positioned by known servomechanisms (not shown) along the optical axis and perpendicularly thereto in such a way that the spot 5 remains at the desired location on the recording layer 7 while the record carrier is being scanned. The known optical and electric elements required for generating an information signal and servosignals are not shown in the Figure.

The magnetic field at the location of the spot 5, which field is required for writing and erasing information in the recording layer 7, is generated by a magnet coil having a winding 10. This known coil has a cylindrical shape with an air core 11 which is also cylindrical and passes the focused radiation beam 4. The magnetic field must be large enough to reverse the magnetization of the recording layer 7 heated by the spot 5. To minimize the power consumption and the resultant heating of the coil, the coil must generate a magnetic field which is as large as possible at a given electric power. The magnetic field on the axis of the coil rapidly decreases with a decreasing distance to the coil. For this reason the coil 10 should be arranged as close as possible to the spot 5. The minimum distance between the coil and the spot is determined by the thickness of the protective coating 9, or the transparent substrate 8 and by the vertical excursions of the record carrier 6 during scanning. By coupling the coil 10 mechanically to the lens 3 whose height is adjustable, the coil, likewise as the lens, will be in compliance with the surface of the record carrier as satisfactorily as possible. The minimum distance between the coil and the protective coating is determined by the permitted record carrier flatness tolerance of the device and by the vertical movements to be expected between the coil and the record carrier in case of shocks against the device. Furthermore, the magnetic field strength at a point on the axis not too far beyond the coil is inversely proportional to the diameter of the winding so that a large field requires a small diameter. The minimum inner diameter is fixed due to the shape of the focused radiation beam 4. In the known coil 10 the inner diameter 12 of the core and the distance between the coil and the protective coating 9 are fixed. A good compromise between tolerance and field strength is a coil-to-spot distance which is approximately equal to the diameter of the coil. The addition of extra turns to the outer side of the winding 10 so as to enlarge the field at the location of the spot 5 is not efficient because the distance between these turns and the spot is relatively large.

A further requirement imposed on the coil is that the magnetic field should be able to reverse its polarity rapidly so as to maximize the writing speed. Since the reactance of a coil increases linearly with the frequency of the coil control and with the inductance, the coil should have a low inductance to convey sufficient current through the winding at high frequencies. Since the inductance of a coil is directly proportional to the square of the diameter of the coil, the coil should thus have a diameter which is as small as possible. This also has the advantage that the winding has a small overall length so that the coil has a small resistance and hence a low power dissipation. However, the diameter of the known coil cannot be reduced to a sufficient extent due to the above-mentioned requirements imposed on the coil.

In the device, as shown in Figure 2, the diameter of the coil can be reduced, namely by filling up the core 11 with a transparent material, for example, glass. Since the core has a refractive index of more than 1.0, the rays entering the core are bent towards the normal so that the apex angle 2α of the focused beam 4 in this core is smaller than in an air core. Consequently, the beam 4 at the location of the upper side of the coil may have a smaller cross-section for obtaining the same spot 5 on the recording layer 7 as compared with the case of an air-cored coil. While the distance between the coil and the record carrier remains the same, the winding may have a smaller inner diameter 12 as is illustrated by the comparison of Figures 1 and 2. The smallest inner diameter of the winding is obtained by choosing the diameter of the core to be equal to the maximum diameter of the radiation beam 4 in the core, possibly increased by a small manufacturing tolerance, and by providing the winding directly on the core or on a thin intermediate layer on the core. For conventional devices the reduction of the core diameter is between 20% and 40% of the height of the winding, dependent on the numerical aperture (NA) of the lens 3 and the refractive index of the core. It is preferred to use a material having a high refractive index for the core because the reduction increases with the refractive index.

The transparent core is preferably also soft-magnetic. It is to be noted that a coil having a transparent, magnetic core is known from Japanese Patent Application No. 3-181 045. However, in this coil no measures have been taken to reduce the inner radius of the winding so as to increase the magnetic field.

If the diameter of the winding 10 is 10% smaller than that of the known coil, it yields a 10% larger magnetic field at the location of the spot 5 when the same current is supplied to the coil. Moreover, since the impedance of the coil, composed of a resistance part and a reactance part, is at least 10% smaller than that of the known coil, the field is at least 20% larger than that of the known coil in the case of the same power consumption. Since the core changes the vergence of the beam 4, the distance between the lens 3 and the record carrier 6 will be larger so that there will be more space for accommodating the coil between the lens and the record carrier. A typical winding for high-frequency writing of information has an inner diameter of 0.1 mm and a height of 0.1 mm, while the distance between the lower side of the coil and the spot is 0.1 mm.

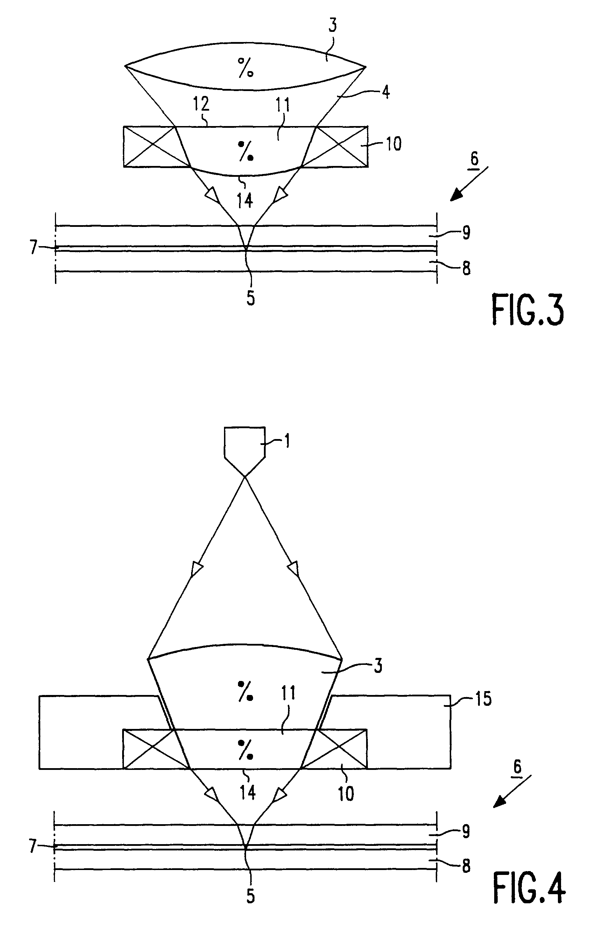

Figure 3 shows an embodiment of the coil according to the invention. The core 11 has the shape of a truncated cone so that the inner diameter of the coil is in compliance with the shape of the focused beam 4 in the core. Consequently, additional turns having also an extra small diameter can be arranged at the lower side of the coil. Due to said dependence of the generated magnetic field on the geometry of the winding, these additional turns contribute to the field at the location of the spot 5 to a relatively large extent. As compared with the coil shown in Figure 2, the increase of the field at the location of the spot due to the core shape shown in Figure 3 may be 10%.

If the core 11 shown in Figures 2 and 3 is made of, for example glass or plastic, it can be used as a winding jig in the manufacture of the coil 10. If the coil is made on another winding jig, the core of the coil may be filled after winding with a viscous transparent synthetic material which is subsequently cured, for example by means of ultraviolet radiation.

The surfaces of the core as shown in Figures 2 and 3 may be given a curvature, *i*.*e*. a non-plane shape at the upper side and/or the lower side. By giving one of the sides a small deviation, referred to in literature as making aspherical, it is possible to correct for optical aberrations. When a lens 3 is used which is designed for a device with an air core 11 in the radiation beam 4, the provision of a core having a higher refractive index will cause spherical aberration in the radiation path. This aberration can then be compensated for by means of an aspherical surface on the core. Such a surface can easily be realised by making use of a mould having the desired shape, for example, when the core is being made of a transparent synthetic material. The core may also be given optical power by means of said curvature so that the core will have a converging effect and can take over a part of the function of the lens 3.

Figure 4 shows a device in which the core 11 and the lens 3 are integrated. The lens and the core may be cemented together or they may form a single optical element. The core in Figure 4 may have a plane surface 14 so that the core can be manufactured more easily and hence at lower cost, while the required quality of the spot 5 is realised when using a satisfactory lens design.

To inhibit reflection losses on the surfaces 13 and 14 of the core 11, these surfaces may be provided with an anti-reflection coating.

It is recommendable to provide the winding 10 with a protective coating at the lower side of the coil so that the vulnerable turns are not damaged in case of contact with the record carrier. The winding may also be protected by causing the lower side 14 of the core 11 to project slightly below the coil so that only this part may come into contact with the record carrier. This core part is preferably given a convex shape. This has the further advantage that the rays in the core extend more parallel to the optical axis than when using a flat lower side so that the diameter of the core of the coil can even be further reduced.

By providing the coil with a yoke 15 of magnetic material, the magnetic field at the location of the spot 5 is further increased. The magnetic material may be, for example ferrite. The geometry of the yoke shown in Figure 4 shows the greatest increase of the field. It is found that addition of turns to the lower side of the winding 10 yields a greater increase of the field than providing magnetic material at that side. The increase of the field by providing the yoke may be a factor of 1.7, dependent on the geometry of the coil. If the field remains the same, the current through the coil with the yoke can be decreased by this factor and the dissipation in the coil can be reduced by a factor of 3. The yoke 15 has the additional advantage that it enhances the dissipation of heat generated in the coil so that the coil can carry a larger current and hence generate more field. A yoke 15, which is of course provided with an aperture to pass the radiation beam 4, may alternatively be used in the devices shown in Figures 2 and 3.

As is known, a magneto-optical record carrier can be read by means of the device described hereinbefore. The coil is then not energized and the beam 4 whose intensity is decreased is used as a read beam. The state of polarisation of the read beam is changed by the inscribed magnetic domains. The beam from the record carrier is coupled out of the path of beam 4 by a beam separator, whereafter the change of the state of polarisation can be detected. For further details about reading and erasing, reference is made to European Patent Application no. EP 0 341 778 A.

## Claims

1. A device for scanning a magneto-optical recording layer (7), comprising:
- a radiation source (1) and an objective system (3) for forming a radiation beam (4) which is focused to a scanning spot (5) on the recording layer; and
- a magnet coil comprising:
- a winding (10) having a maximum inner diameter and
- a core(11)
- being a truncated cone having an apex angle and
- comprising a transparent material throughout the height of the winding (10)
- the magnet coil being arranged for passing the radiation beam through the core, and being arranged between the objective system and the recording layer for generating a magnetic field at the location of the scanning spot;
- the maximum inner diameter (12) of the winding (10) being substantially equal to the maximum diameter of the radiation beam (4) in the winding;
**characterized in that**,
- the apex angle of the core is equal to the apex angle of the radiation beam in the core; and
- the transparent material is such that the vergence of the radiation beam (4) in the core is smaller than the vergence of the radiation beam in the medium surrounding the coil.

2. A device as claimed in Claim 1, **characterized in that** at least one surface (13) of the core (11) is curved.

3. A device as claimed in Claim 1, or 2, **characterized in that** the objective system (3) is integrated with the core (11).

4. A device as claimed in Claim 1, 2, or 3, **characterized in that** the core (11) projects from the winding (10) at the side of the coil facing the scanning spot (5).

5. A device as claimed in Claim 1, 2, 3, or 4, **characterized in that** the coil has a yoke (15) of magnetic material.

## Patentansprüche

1. Vorrichtung zum Abtasten einer magnetooptischen Aufzeichnungsschicht (7) mit:
- einer Strahlungsquelle (1) und einem Objektivsystem (3) zur Erzeugung eines Strahlenbündels (4), welches auf einen Abtastpunkt (5) auf der Aufzeichnungsschicht fokussiert wird; sowie
- einer Magnetspule mit:
- einer Wicklung (10) mit einem maximalen Innendurchmesser und
- einem Kern (11),
- welcher durch einen Kegelstumpf mit einem Scheitelwinkel dargestellt ist und
- über die gesamte Höhe der Wicklung (10) ein transparentes Material aufweist,
- wobei die Magnetspule vorgesehen ist, um das Strahlenbündel durch den Kern hindurchzuleiten, und zwischen dem Objektivsystem und der Aufzeichnungsschicht angeordnet ist, um an der Stelle des Abtastpunkts ein Magnetfeld zu erzeugen;
- wobei der maximale Innendurchmesser (12) der Wicklung (10) im Wesentlichen dem maximalen Durchmesser des Strahlenbündels (4) in der Wicklung entspricht;
**dadurch gekennzeichnet, dass**
- der Scheitelwinkel des Kerns dem Scheitelwinkel des Strahlenbündels in dem Kern entspricht und
- das transparente Material so vorgesehen ist, dass die Vergenz des Strahlenbündels (4) in dem Kern geringer als die Vergenz des Strahlenbündels in dem die Spule umgebenden Medium ist.

2. Vorrichtung nach Anspruch 1, **dadurch gekennzeichnet, dass** mindestens eine Oberfläche (13) des Kerns (11) gekrümmt ist.

3. Vorrichtung nach Anspruch 1 oder 2, **dadurch gekennzeichnet, dass** das Objektivsystem (3) mit dem Kern (11) integriert ist.

4. Vorrichtung nach Anspruch 1, 2 oder 3, **dadurch gekennzeichnet, dass** der Kern (11) auf der dem Abtastpunkt (5) zugewandten Seite der Spule aus der Wicklung (10) herausragt.

5. Vorrichtung nach Anspruch 1, 2, 3 oder 4, **dadurch gekennzeichnet, dass** die Spule ein Joch (15) aus Magnetmaterial aufweist.

## Revendications

1. Dispositif pour balayer une couche d'enregistrement magnéto-optique (7) comprenant:
- une source de rayonnement (1) et un système d'objectif (3) pour constituer un faisceau de rayonnement (4) qui est focalisé sur un spot de balayage (5) présent sur la couche d'enregistrement, et
- une bobine d'électro-aimant comprenant:
- un enroulement (10) ayant un diamètre intérieur maximal et
- un noyau (11)
- étant un cône tronqué ayant un angle de sommet et
- comprenant un matériau transparent à travers toute la hauteur de l'enroulement (10)
- la bobine d'électro-aimant étant disposée de manière à laisser passer le faisceau de rayonnement à travers le noyau et étant disposée entre le système d'objectif et la couche d'enregistrement pour générer un champ magnétique à l'emplacement du spot de balayage;
- le diamètre intérieur maximal (12) de l'enroulement (10) étant sensiblement égal au diamètre maximal du faisceau de rayonnement (4) dans l'enroulement;
**caractérisé en ce que**,
l'angle de sommet du noyau est égal à l'angle de sommet du faisceau de rayonnement dans le noyau; et
le matériau transparent est tel de façon que la vergence du faisceau de rayonnement (4) dans le noyau soit inférieure à la vergence du faisceau de rayonnement dans le milieu entourant la bobine.

2. Dispositif selon la revendication 1, **caractérisé en ce qu'**au moins une surface (13) du noyau (11) est courbée.

3. Dispositif selon la revendication 1 ou 2, **caractérisé en ce que** le système d'objectif (3) fait corps avec le noyau (11).

4. Dispositif selon la revendication 1, 2 ou 3, **caractérisé en ce que** le noyau (11) fait saillie de l'enroulement (10) du côté de la bobine qui se situe vis-à-vis du spot de balayage (5).

5. Dispositif selon la revendication 1, 2, 3 ou 4, **caractérisé en ce que** la bobine présente une carcasse (15) constituée de matériau magnétique.
